Europäisches Patentamt

European Patent Office

Office européen des brevets

(11) Publication number: **0 112 314 B1**

# EUROPEAN PATENT SPECIFICATION

(45) Date of publication of patent specification: **24.06.87**

(21) Application number: **83850330.8**

(22) Date of filing: **13.12.83**

(51) Int. Cl.⁴: **E 04 F 13/02, B 05 D 7/26, C 09 D 5/18**

(54) **A method and a composition for mounting fire coded wall coverings.**

(30) Priority: **17.12.82 SE 8207218**

(43) Date of publication of application:
**27.06.84 Bulletin 84/26**

(45) Publication of the grant of the patent:
**24.06.87 Bulletin 87/26**

(84) Designated Contracting States:
**AT BE CH DE FR GB IT LI LU NL SE**

(56) References cited:
**DE-A-1 784 797**
**DE-B-1 303 680**
**FR-A-1 206 154**

**CHEMICAL ABSTRACTS, Vol.89, no.16,**
**October 1978, page 95, no. 131212f, Columbus,**
**Ohio (USA)**

(73) Proprietor: **Casco Nobel Aktiebolag**
**Box 11010**
**S-100 61 Stockholm (SE)**

(72) Inventor: **Carlsson, Nils-Erik**
**Lindvägen 5**
**S-130 40 Djurhamn (SE)**

(74) Representative: **Schöld, Zaid**
**c/o KemaNobel AB Patents Box 11065**
**S-100 61 Stockholm (SE)**

Courier Press, Leamington Spa, England.

**Description**

The present invention relates to a method for mounting fire-coded wall coverings by coating the wall surface with an adhesive, fixing a web by means of the adhesive and coating the web with a primer and optionally a top paint and to the composition for the application of fire-coded wall coverings.

Escape exits and other premises with requirements on fulfilling fire codes are often designed with walls, floors and ceilings of incombustible materials such as concrete, brick, plasterboard or the like. To make it possible to provide these surfaces with a finish, this will also have to fulfil specific requirements on fire-coding, meaning small calorie contribution and minor smoke generation at fire. For example, wall papers as a rule contain too high amounts of combustible organic components to be considered when the requirements on fire coding are more severe. In these applications a common wall covering is thus a web of incombustible material, such as glass fibre, which is glued to the wall and then painted with a primer and a surface paint. The web will level out irregularities in the substrate to some degree and give the wall an aesthetically attractive texture. However, at fire the web layer will also delay heat transfer to the layers below, which can contain combustible components such as surface layers of paper on plaster board. The binder between the web, and the wall and also the paint layers on the web do, however, contain organic components which are combustible and give rise to smoke. It is thus important to keep the amount of adhesive and of paint low at this type of coating. However, the amount of adhesive cannot be kept as small as desired as the fixing of the web to the wall will then be jeopardized. If the web comes off easily at a fire, the dampening effect of the web will not be obtained but only the disadvantage of the organic components which are present. A too small amount of adhesive can also lead to air inclusions between the wall and the web, which will expand at fire and increase the risk for web loosening.

Similarly it is difficult to reduce the amount of paint on the surface of the web to any significant extent. Small amounts of paint means risks for air conclusions as well as esthetically unsatisfactory covering. To reduce the total amount of paint to some extent a primer with a strongly covering effect is used before the surface paint is applied. It is evident that the application of the described covering will require a fairly large amount of work and time. While mounting a wall paper only requires a coating with adhesive and mounting of the wall paper it is necessary, when using a glass fibre web, to await the drying of the adhesive after mounting to the web, coat and work a primer into the web, await the drying of the primer and finally apply the surface paint. Further, every step in the covering process will require more labour when smaller amounts of adhesive and paint are allowed, since smaller amounts require higher accuracy for satisfactory covering and more manipulation of the glass fibre web and the primer layer to completely fill the web with the compositions used. It is also known by FR,A,1206154 to mount a fibre web on a wall where the coating or adhesive is applied directly on the obverse side of the web, without coating the wall first. With this method it is difficult to adhere the web properly to the wall and there is a risk that too great amount of coating will be used. Since it is considerably easier to work with higher amounts of coating material substantially higher amounts are used in practice than the often unrealistically low limits in the Official Approval. The fire properties intended will then not be obtained.

It is an object of the present invention to offer a process and a means by which the above mentioned problems are avoided. It is a particular object of the invention to make it possible to apply a web layer in such a manner that a satisfactory adherence to the substrate is obtained without the risk that the web will come loose at fire. A further object of the invention is to facilitate the application in such a manner that air inclusions in the layers are avoided. Still another object of the invention is to achieve a coating process which is time-saving and simple also when small amounts of coating compositions are used, and also to achieve a process which is less sensitive to variations in amounts. A further object of the invention is to make it possible to have a final coating layer with very good fire resistant properties.

These objects are achieved by means of the process and the composition as evident from the claims.

According to the invention the same composition is used both in the adhesive layer and the primer layer and both the web and the primer layer are applied while the composition in the adhesive layer is still wet. Hereby a considerable amount of time is saved during the mounting since the adhesive layer need not be dried before the primer layer is applied. More important, however, is that the totally required amount of composition for adhesion, through wetting and covering of the web will be smaller than if the first layer is allowed to dry, which is both a fire advantage and a labour advantage since the mounting at a given amount of composition is facilitated. Since the web is manipulated both at the mounting and at the application of the primer layer, before the composition in the adhesive layer has dried, the risk for air conclusions after application of the second layer is reduced. A continuous adhesive layer without inhomogenities will result from the wall through the web and to its surface, which gives a good adherence of the covering to the wall with minimized risk for web loosening at fire. As the composition acts both as adhesive and primer it will give also the adhesive layer a pigmentation whereby opacity and covering is obtained with smaller amount of composition than otherwise. Using the described manner of application means that the fire retarding additives in the composition will be distributed over a greater depth in the finished wall covering than what is usual and this improves the heat dampening effect and makes the fire properties of the covering less dependent on variations in the applied amounts of the composition.

Further objects and advantages of the invention will be evident from the detailed description below. As has been mentioned, the substrate for a covering of the described type is generally some

2

incombustible building material such as brick, plaster, concrete or gypsum board although it is possible to cover also other types of substrates according to the invention. The heat dampening effect of the covering is of particular value when the substrates are thin or when they contain cumbustible components as when plaster board is used.

The web in the covering is suitably of a material which is difficulty combustible, or incombustible and is preferably based on inorganic fibres, suitably glass fibres. A non-woven web can be used but woven materials are preferred from an aesthetical point of view. The best properties of the covering will be obtained if the web has a porosity which makes it permeable to and can be impregnated by the composition according to the invention. Webs of the described type can without disadvantage to the invention contain a sizeing component e.g. of starch to improve the stability and the stiffness. The thickness should be kept low to minimize the soaking capacity of the material. The thickness of the web should suitably be below 2 mm and preferably also below 1 mm. However, the thickness should preferably be kept above about 0.2 mm to make it possible to handle it and to give the desired structure. Suitable weights of the web are between 50 and 400 $g/m^2$ and particularly between 80 and 200 $g/m^2$.

The combined adhesive and primer composition of the invention is water based and contains as main components a dispersed thermoplastic binder, inorganic filler and fire retardants.

The thermoplastic dispersion should be selected in view of stability electrolytes and ability to withstand high filler amounts. Polyvinyl acetate or polyethylene-vinyl acetate can for example be used. Chlorinated polymers can advantageously be used since they are less flammable. However, since smoke containing chlorine can cause other problems the amount of chlorine should be kept low and the binder can in these cases advantageously be combined with chlorine scavengers. Terpolymers of vinyl acetate, vinyl chloride and ethylene have been found particularly advantageous. The amount of the thermoplastic component should be kept comparatively high to give a strong and flexible bond between the wall and the web. The amount of pure polymer in the composition can be between 10 and 35 per cent by weight and particularly between 15 and 25 per cent by weight. But the lower limits can be reduced to 5 or better 10 per cent by weight respectively in more diluted compositions or for thinner coatings.

A pigment or filler shall be present in the composition to give it covering properties as it also acts as primer. Suitable pigments are incombustible and preferably inorganic. Titanium dioxide is a preferred pigment. The amount in the composition can suitably be kept between 0 and 12 per cent by weight, better between 2 and 12 per cent and particularly between 3 and 8 per cent by weight. If any of the fire retardant additives have pigment properties, the special pigment addition can either fully or in part be substituted for a correspondingly increased amount of fire retardant additive. This means that the amount of special pigments can be reduced to zero.

The composition shall contain fire retardant additives. These are of many types, for example substances which give rise to fire quenching gases, substances which foam at heating and thus give a heat insulating effect, substances which have a cooling effect by decomposing during strong heat consumption, substances which bind smoke etc. For the purpose of the invention substances which have a cooling effect by decomposing under liberation of water are particularly suitable since at this mechanism the risk that the adhesive strength of the composition will be lost too rapidly or at too low temperatures is at its smallest. Among such substances compounds which are inorganic, in powder form and insoluble are preferred and particularly such which contain the water as water of crystallization, for example calcium hydrate or magnesium hydrate. Aluminium hydrate which release the main part of the water at temperatures between 200 and 300°C is particularly preferred. The amount of water releasing substance in the composition is advantageously between 15 and 60 and preferably between 20 and 40 per cent by weight. The composition may also include a smoke retarding and a quenching substance. Antimony trioxide is particularly suitable as it is capable of binding halogens which reduces the amount of harmful gases at a fire and also makes it possible to use higher amounts of chlorinated thermoplastic materials in the composition. The reaction products are also capable of binding free radicals and of quenching fire. The amount in the composition can be kept between 0 and 10 and preferably between 2 and 8 per cent by weight. Higher amounts of fire retardant additives then mentioned above can be allowed if they function by replacing part of the inorganic pigment mentioned above. However, they should not make up more than half of this addition with consideration to the strength of the composition at fire.

Other additives or auxiliary compounds are incorporated in the composition, for example wetting agents and components which adjusts the rheology such as thickeners and thixotropic agents. It can also be suitable to incorporate a plasticizer for the thermoplastic component to control its film-forming temperature. The amount of organic additives of this kind in the composition should be kept between 0 and 10 and preferably between 2 and 8 per cent by weight.

When adjusting the viscosity and the rheology of the composition consideration should be taken that the viscosity and the grab shall be pronounced so that the web is adhered and fixed in the first applied layer immediately at the mounting. The viscosity should, however, not be so high that problems arise with the application of the composition in thin layers or with impregnation of the web pores. Neither should the viscosity be so high that an already applied web tends to loosen and adhere to the tools at application and manipulation. Besides by addition of thickeners and thixotropic agents, the viscosity is suitably adjusted by means of the water content which should be between 25 and 50 and preferably between 30 and 45 per cent by weight in the composition. The viscosity is suitably between 10.000 and 100.000 MPas and particularly between 20.000 and 60.000 MPas. The upper water limits can be increased to 60 or better to at most 55 per cent by weight in order to reduce the total amount of composition left within these viscosity limits. As said, at application of the covering, the substrate is first coated with a first layer of the composition. The web is then mounted in the layer and flattened to give as much penetration of the composition into the web as possible. Coating and working is then continued while more of the composition is applied until a complete covering of the web with the composition has been obtained. Not until after this the drying is allowed. The totally used amount of the composition is suitably between 150 and 800 $g/m^2$ and particularly between 250 and 600 $g/m^2$, depending somewhat on the web material. The spreading and the treating can be carried out by means of conventional tools such as a brush or a roller. The composition can also be applied by spraying. After drying the amount left is suitably between 75 and 400 $g/m^2$ and preferably between 100 and 300 $g/m^2$.

The dried composition can be post-treated in any desired manner and particularly a painting with a covering surface paint can be done without any substantial decrease in the fire retardant properties.

Example

A combined adhesive/primer composition was prepared containing 15 per cent by weight of a terpolymer of vinyl acetate, vinyl chloride and ethylene, 30 per cent by weight of aluminium hydrate, 6 per cent by weight of antimony trioxide, 6 per cent by weight of titanium dioxide, 3 per cent by weight of a thickener, 2 per cent by weight of a plasticizer for the polymer and 38 per cent by weight of water.

A plaster board was coated with about 185 $g/m^2$ of the composition and a glass fibre web having a specific surface weight of 135 $g/m^2$ was then mounted in the layer by being rolled out with a roller. To this glass fibre web additionally 450 $g/m^2$ of the composition were then added and smoothed out into a covering and filling primer layer. After drying both layers about 170 $g/m^2$ of a cover paint (Millitex semi-mat 20) was applied.

The fire properties of the thus treated board was tested according to the standard NORDTEST 004, which means that temperature and smoke content was measured in the gases developed from a room delimited on four sides by the tested material and in which room a flame was sustained. The board gave test values quite close to those for incombustible material (class 0) and clearly below the closest inferior fire-retardant class (class 1).

**Claims**

1. A method for the application of fire coded wall coverings by applying an adhesive on the wall surface, adhering a web by use of the adhesive and coating the web with a primer paint, characterized in that the adhesive layer is a first coating of a composition containing an aqueous thermoplastic dispersion, inorganic filler and fire retardant additives, that the web is adhered on the still wet first coating of the composition, that the primer paint is a second coating of the same composition and is applied before the first coating has dried and that the coatings are then dried.

2. The method of claim 1, characterized in that the coatings are painted after drying.

3. The method of claim 1, characterized in that the total amount of composition applied in the two coatings is between 150 and 800 $g/m^2$.

4. The method of claim 3, characterized in that the amount is between 250 and 600 $g/m^2$.

5. The method of claim 1, characterized in that the fire retardant additives includes aluminium hydrate.

6. The method of claim 1, characterized in that the fire retardant additives includes antimony trioxide.

7. The method of claim 1, characterized in that the web is a glass fibre web.

8. Composition for the application of fire coded wall coverings, according to anyone of claims 1 to 7, characterized in that it includes in per cent by weight:

| | |
|---|---|
| thermoplastic adhesive (100%) | 5—35 |
| water releasing fire retardant | 15—60 |
| quenching fire retardant | 0—10 |
| inorganic filler | 0—12 |
| auxiliary compounds | 0—10 |
| water | 25—60 |

9. The composition of claim 8, characterized in that it includes:

| | |
|---|---|
| thermoplastic adhesive (100%) | 10—25 |
| water releasing fire retardant | 20—40 |
| quenching fire retardant | 2— 8 |
| inorganic filler | 3— 8 |
| auxiliary compounds | 2— 8 |
| water | 30—55 |

10. The composition of claim 8, characterized in that the water releasing fire retardant is aluminium hydrate and the quenching fire retardant is antimony trioxide.

**Patentansprüche**

1. Verfahren zum Aufbringen von feuerfesten Wandüberzügen, indem ein Klebstoff auf die Wandoberfläche aufgebracht wird, eine Bahn durch Verwendung des Klebstoffs angeklebt wird und Überziehen der Bahn mit einem Grundierungsanstrich, dadurch gekennzeichnet, daß die Klebeschicht ein erster Überzug einer Zusammensetzung ist, die eine wäßrige, thermoplastische Dispersion, anorganischen Füllstoff und feuerverzögernde Zusätze enthält, daß die Bahn auf dem noch feuchten, ersten Überzug der Zusammensetzung angeklebt wird, daß der Grundierungsanstrich ein zweiter Überzug der gleichen Zusammensetzung ist und aufgebracht wird, bevor der erste Überzug getrocknet wurde, und daß die Überzüge dann getrocknet werden.

2. Verfahren gemäß Anspruch 1, dadurch gekennzeichnet, daß die Überzug nach dem Trocknen angestrichen werden.

3. Verfahren gemäß Anspruch 1, dadurch gekennzeichnet, daß die Gesamtmenge der in zwei Überzügen aufgebrachten Zusammensetzung zwischen 150 und 800 g/m² liegt.

4. Verfahren gemäß Anspruch 3, dadurch gekennzeichnet, daß die Menge zwischen 250 und 600 g/m² liegt.

5. Verfahren gemäß Anspruch 1, dadurch gekennzeichnet, daß die feuerverzögernden Zusätze Aluminiumhydrat einschließen.

6. Verfahren gemäß Anspruch 1, dadurch gekennzeichnet, daß die feuerverzögernden Zusätze Antimontrioxid einschließen.

7. Verfahren gemäß Anspruch 1, dadurch gekennzeichnet, daß die Bahn eine Glasfaserbahn ist.

8. Zusammensetzung zum Aufbringen von feuerfesten Wandüberzügen gemäß einem der Ansprüche 1 bis 7, dadurch gekennzeichnet, daß sie, in Gewichtsprozenten, umfaßt:

| | |
|---|---|
| thermoplastischen Klebstoff (100%) | 5—35 |
| wasserfreisetzendes, feuerverzögerndes Mittel | 15—60 |
| feuerlöschendes Verzögerungsmittel | 0—10 |
| anorganischer Füllstoff | 0—12 |
| Hilfsverbindungen | 0—10 |
| Wasser | 25—60 |

9. Zusammensetzung gemäß Anspruch 8, dadurch gekennzeichnet, daß sie umfaßt:

| | |
|---|---|
| thermoplastischen Klebstoff (100%) | 10—25 |
| wasserfreisetzendes, feuerverzögerndes Mittel | 20—40 |
| feuerlöschendes Verzögerungsmittel | 2— 8 |
| anorganischen Füllstoff | 3— 8 |
| Hilfsverbindungen | 2— 8 |
| Wasser | 30—55 |

10. Zusammensetzung gemäß Anspruch 8, dadurch gekennzeichnet, daß das wasserfreisetzende, feuerverzögernde Mittel Aluminiumhydrat und das feuerlöschende Verzögerungsmittel Antimontrioxid ist.

**Revendications**

1. Procédé pour l'application de revêtements muraux satisfaisant aux normes anti-feu, par application d'un adhésif sur la surface du mur, collage d'une bande au moyen de l'adhésif, et revêtement de la bande avec une peinture primaire, caractérisé par le fait que la couche d'adhésif est un premier revêtement d'une composition contenant une dispersion thermoplastique aqueuse, une charge minérale et des additifs retardateurs de combustion, que l'on colle la bande sur le premier revêtement encore humide de la composition, que la peinture primaire est une deuxième couche de la même composition et qu'on l'applique avant que le premier revêtement n'ait séché, et que l'on sèche alors les revêtements.

2. Procédé selon la revendication 1, caractérisé par le fait que l'on peint les revêtements après séchage.

3. Procédé selon la revendication 1, caractérisé en ce que la quantité totale de composition appliquée dans les deux revêtements est de 150 à 800 g/m².

4. Procédé selon la revendication 3, caractérisé en ce que la quantité est de 250 à 600 g/m².

5. Procédé selon la revendication 1, caractérisé en ce que les additifs retardateurs de combustion comprennent de l'hydrate d'aluminium.

6. Procédé selon la revendication 1, caractérisé en ce que les additifs retardateurs de combustion comprennent du trioxyde d'antimoine.

7. Procédé selon la revendication 1, caractérisé en ce que la bande est une bande de fibres de verre.

8. Composition pour l'application de revêtements muraux satisfaisant aux normes anti-feu selon l'une quelconque des revendications 1 à 7, caractérisée par le fait qu'elle comprend, en pourcentage en poids:

**0 112 314**

| adhésif thermoplastique (à 100%) | 5 à 35 |
| retardateur de combustion libérant de l'eau | 15 à 60 |
| retardateur de combustion refroidissant | 0 à 10 |
| charge minérale | 0 à 12 |
| composés auxiliaires | 0 à 10 |
| eau | 25 à 60 |

9. Composition selon la revendication 8, caractérisée par le fait qu'elle comprend:

| adhésif thermoplastique (à 100%) | 10 à 25 |
| retardateur de combustion libérant de l'eau | 20 à 40 |
| retardateur de combustion refroidissant | 2 à 8 |
| charge minérale | 3 à 8 |
| composés auxiliaires | 2 à 8 |
| eau | 30 à 55 |

10. Composition selon la revendication 8, caractérisée par le fait que le retardateur de combustion libérant de l'eau est l'hydrate d'aluminium, et que le retardateur de combustion refroidissant est le trioxyde d'antimoine.

6